# EUROPEAN PATENT APPLICATION

(11) **EP 2 085 865 A1**
(43) Date of publication of application: **05.08.2009**
(21) Application number: 08150843.4
(22) Date of filing: 30.01.2008
(51) Int. Cl.: G06F 3/048

(54) **Electronic device and method of controlling the same**

(71) Applicant: Research In Motion Limited, Waterloo, Ontario N2L 3W8 (CA)
(72) Inventor: Lee, Jong-Suk, Thornhill Ontario L4J 8G4 (CA); Rak, Roman, Waterloo Ontario N2T 2V8 (CA); Mujkic, Alen, Mississauga Ontario L5J 2E3 (CA)
(74) Representative: Rickard, David John

(57) **Abstract**

An electronic device includes a display device for displaying a graphical user interface including a plurality of user-selectable features. A touch-sensitive input device includes an overlay disposed on the display device and a controller connected to the overlay, the touch-sensitive input device for providing a touch-sensitive area on the overlay, on the plurality of user-selectable features and for detecting an object proximal the user-selectable features on the display device. Functional components are provided including a processor connected to the display device and touch-sensitive input device, and a memory device for storage of computer-readable program code executable by the processor for changing the graphical user interface in response to detecting the object proximal one of the user-selectable features, prior to selection of any of the user-selectable features.

## Description

The present application relates generally to electronic devices including touch screen display devices.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and easy portability. Smaller devices are generally desirable for portability. A touch screen input/output device is particularly useful on such handheld devices as such handheld devices are small and are therefore limited in space available for user input and output devices. Further, the screen content on the touch screen devices can be modified depending on the functions and operations being performed.

Touch screen devices are constructed of a display, such as a liquid crystal display, with a touch-sensitive overlay. These devices suffer from disadvantages, however. For example, with decreasing size of electronic devices, user-selectable features such as buttons displayed on the touch screen display of the portable electronic device are limited in size. When displaying a number of user-selectable features such as buttons of a virtual keyboard, user selection becomes difficult as the buttons are small and the user's finger can be inexact. Thus, selection errors may be made as a result of target inaccuracy and a lack of a touch feedback.

Improvements in touch screen devices are therefore desirable.

### GENERAL

According to an aspect, there may be provided a method of controlling an electronic device. The method may comprise providing a graphical user interface including a plurality of user-selectable features on a touch-sensitive display, detecting an object proximal the user-selectable features on the touch-sensitive display, and changing the graphical user interface in response to detecting the object proximal the user-selectable features, prior to selection of any of the user-selectable features.

According to another aspect, there may be provided an electronic device. The electronic device may comprise a display device for displaying a graphical user interface including a plurality of user-selectable features. A touch-sensitive input device may comprise an overlay disposed on the display device and a controller connected to the overlay. The touch-sensitive input device may provide a touch-sensitive area on the overlay, on the plurality of user-selectable features and for detecting an object proximal the user-selectable features on the display device. Functional components may be provided comprising a processor connected to the display device and touch-sensitive input device, and a memory device for storage of computer-readable program code executable by the processor for changing the graphical user interface in response to detecting the object proximal one of the user-selectable features, prior to selection of any of the user-selectable features.

According to another aspect, there may be provided computer-readable medium having computer-readable code embodied therein for execution by a processor for providing a graphical user interface including a plurality of user-selectable features on a touch-sensitive display, detecting an object proximal the user-selectable features on the display, and changing the graphical user interface in response to detecting the object proximal the user-selectable features, prior to selection of any of the user-selectable features.

Changing the graphical user interface can comprise providing a visual indicator associated with a nearest one of the user-selectable features to the object. The visual indicator can be isolating the nearest one of the user-selectable features from others of the user-selectable features. The user-selectable features can be moved away from the nearest one of the user-selectable features, which can be buttons on the graphical user interface.

In another aspect, detecting my comprise detecting a conductive object when spaced from the touch-sensitive display. The graphical user interface can be changed as a function of distance of the object from the touch-sensitive display. Changing the graphical user interface can comprise moving others of the user-selectable features a distance away from the nearest one of the user-selectable features, the distance increasing with decreasing distance of the object from the touch-sensitive display. The nearest one of the user-selectable features can be selected in response to contact of the object with the touch-sensitive display.

In yet another aspect, changing the graphical user interface may comprise changing the graphical user interface as a function of area of contact of layers of the touch-sensitive display as a result of pressure from the object on the touch-sensitive display. Changing the graphical user interface can comprise moving others of the user-selectable features a distance away from the nearest one of the user-selectable features, the distance increasing with increasing area of contact of the layers. The nearest one of the user-selectable features can be selected when the area of contact of the layers reaches a minimum area of contact.

Advantageously, the targeted user-selectable feature or button is highlighted on the touch screen display, by moving other buttons away from the determined intended target.

### BRIEF DESCRIPTION OF THE DRAWINGS

Embodiments of the present application will now be described, by way of example only, with reference to the attached Figures, wherein:

Figure 1 is a block diagram of a portable electronic device according to one example;

Figure 2A is a top view of an exemplary portable electronic;

Figure 2B is a sectional side view of the portable electronic device of Figure 2A;

Figure 3 is a flow chart showing a method for controlling an electronic device according to an embodiment;

Figures 4A to 4E show portions of a GUI displayed on the portable electronic device in the method of Figure 3.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a touch screen display and to a portable electronic device including a touch screen display. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

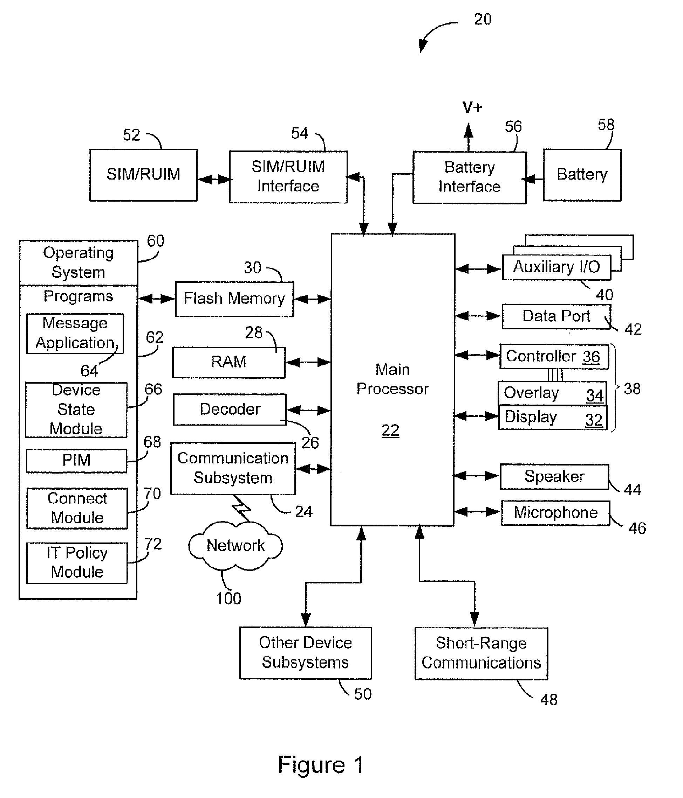

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 100. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 100 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 100 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 connected to an electronic controller 36 that together make up a touch screen display 38, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 100, and device-resident functions such as a calculator or task list.

The portable electronic device 20 can send and receive communication signals over the wireless network 100 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 100. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 100 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 100. PIM data items may be seamlessly integrated, synchronized, and updated via the wireless network 100 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 100, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 100. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 100 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

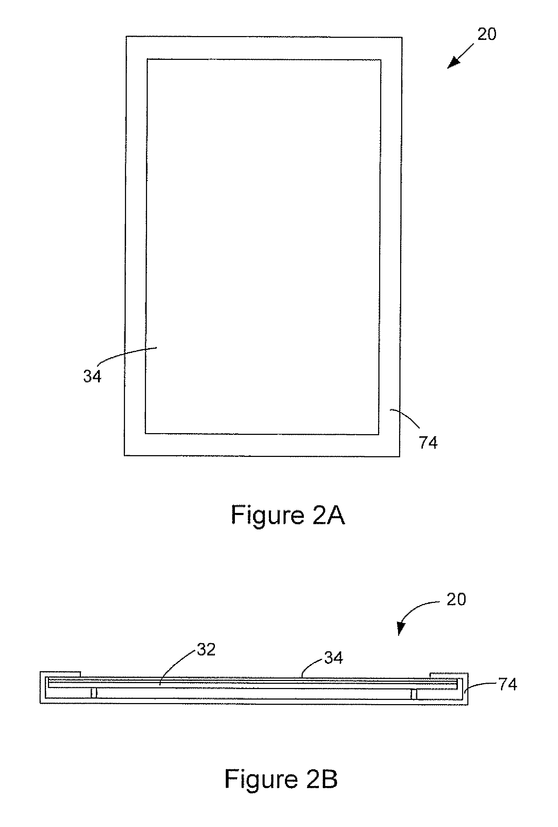

Reference is now made to Figures 1, 2A and 2B, which show a block diagram, a top view, and a sectional side view, respectively of an exemplary portable electronic device 20. The portable electronic device 20 includes the display 32 for displaying a graphical user interface including a plurality of user-selectable features. A touch-sensitive input device includes the overlay 34 disposed on the display 32 and the controller 36 connected to the overlay 34. The touch-sensitive input device is for providing a touch-sensitive area on the overlay 34, on the plurality of user-selectable features and for detecting an object proximal the user-selectable features on the display 32. Functional components are provided including a processor 22 connected to the display 32 and touch-sensitive input device including the overlay 34 and the controller 36, and a memory device, which in the present example is the flash memory 30 for storage of computer-readable program code executable by the processor 22 for changing the graphical user interface in response to detecting the object proximal one of the user-selectable features prior to selection of any of the user-selectable features.

Referring now to Figures 2A and 2B, there is shown an exemplary portable electronic device 20. The portable electronic device 20 shown in Figures 2A and 2B includes the touch screen display 38, which is framed by a housing 74 that houses the internal components shown in Figure 1. As indicated, the housing 74 frames the touch screen display such that the touch-sensitive overlay 34 is exposed for user interaction with the graphical user interface displayed on the LCD display 32. In the present example, user interaction with the graphical user interface is performed through the use of the touch-sensitive overlay 34 only. Thus, a virtual keyboard is provided via the touch screen display 38 for entry of data, for example, for composing an electronic message in the message application 64, for creating and storing PIM data, or for any other suitable application.

The touch screen display 38 can be any suitable touch screen display. In one embodiment, the touch screen display 38 is a capacitive touch screen display 38. Thus, the capacitive touch screen display 38 includes the display 32 and the touch-sensitive overlay 34, which in the present example is a capacitive touch-sensitive overlay 34. It will be appreciated that the capacitive touch-sensitive overlay 34 includes a number of layers in a stack and is fixed to the display 32 via a suitable optically clear adhesive. The layers include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. Each of the capacitive touch sensor layers can be, for example, a layer of patterned indium tin oxide (ITO)

The X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor circuit layers provides a signal to the controller 36 in response to capacitive coupling with a suitable object such as a finger of a user or a conductive object held in the bare hand of a user, resulting in a change in the electric field of each of the touch sensor layers. The signals represent the respective X and Y touch location.

Capacitive coupling can occur through the cover layer and through a small air gap between the cover layer and the object. Thus, capacitive coupling occurs, resulting in a signal being sent to the controller 36, when the object approaches the surface of the cover layer and prior to contact with the cover layer. The sensitivity of the touch-sensitive overlay 34 and the controller 36 can therefore be set to detect a suitable object at a small distance away from the cover layer of, for example, about five millimeters or less. The X and Y location on the touch-sensitive overlay 34 is determined by capacitive coupling with the respective touch sensor layers. Thus, the X and Y location of the closest point on the touch-sensitive overlay 34 to the object, is determined. Further, capacitive coupling increases as the object approaches the touch-sensitive overlay 34 and the change in capacitive coupling can be detected as the signals from the touch-sensitive overlay 34 to the controller 36 change. Thus, the touch-sensitive overlay 34 and the controller 36 act to detect proximity, detecting a suitable object proximal the surface of the cover layer and the proximity of the object can be determined based on the signals received at the controller 36.

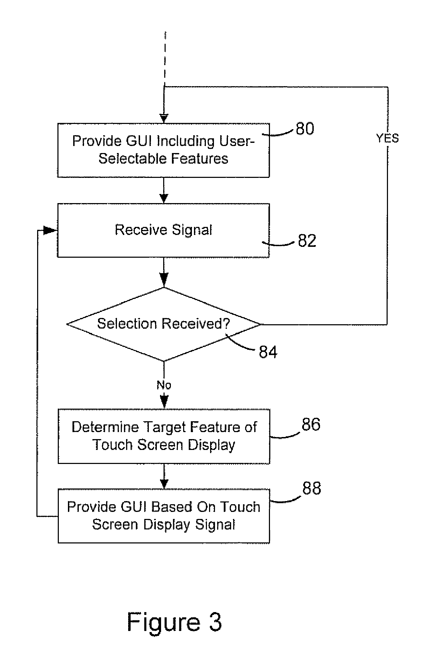

Reference is now made to Figure 3 to describe a method of controlling an electronic device 20 according to an embodiment. As shown, a graphical user interface is displayed on the display 32 and includes user-selectable features such as virtual buttons for selection using the touch-sensitive overlay 34 (step 80). The graphical user interface can be provided in any suitable application, such as the message application 64 during composition of a message, for example. Signals are sent from the touch-sensitive overlay 34 to the controller 36 when a suitable object such as a finger or other conductive object held in the bare hand of a user, is detected (step 82). If it is determined that no selection has been received (step 84), the closest user-selectable feature on the GUI to the object is determined (step 86) based on X and Y values determined from the signals from the touch-sensitive overlay 34. Finally, the GUI is changed to provide a visual indicator associated with the closest user-selectable feature on the GUI (step 88). Thus, the user is provided with a visual indicator as to which user-selectable feature is closest to the object and therefore is being selected, prior to selection.

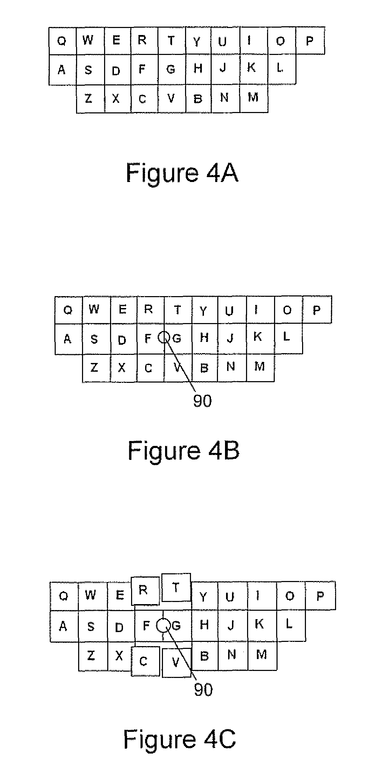

Continued reference is made to Figure 3 to describe an example of the method of controlling the electronic device, with reference also to Figures 4A to 4E.
Figures 4A to 4E show portions of a GUI displayed on the display 32 in one example of the method of Figure 3. In the present embodiment, the touch screen display 38 is a capacitive touch screen display 38 as described above. As shown, the portion of the GUI provides a keyboard for user-selection of buttons in entering data in the form of letters. Such a keyboard is useful in typing, for example, a message or in entry of PIM data.
Thus the GUI, including the user-selectable buttons of the keyboard, is provided in Figure 4A (step 80).

The user then begins data entry by touching the touch screen display 38. To select a button of the keyboard, the user touches the touch-sensitive overlay 34 at a location of the desired button on the keyboard. Prior to contact with the touch screen display 38, the presence of the object, such as the user's finger, is detected as a result of capacitive coupling between the finger or other suitable object and the touch sensor layers of the touch-sensitive overlay 34. In Figure 4B, capacitive coupling between the object and the touch sensor layers of the touch-sensitive overlay 34 results in changes in the electric field and the resulting signals are received at the controller 36 (step 82). The location of the object relative to the touch screen display 38 is shown generally by the numeral 90 in Figures 4B to 4E. In the present example, the target feature has not yet been selected as the object is approaching the target feature (step 84). The target feature of the touch screen display 38 is then determined at the processor 22 based on the X and Y values determined from the signals received at the controller 36 (step 86). In the example shown in Figure 4B, the object is spaced from the screen, proximal the keyboard buttons "F" and "G". The target feature is thus determined to be the closest button to the object. In the present example, the target feature is determined to be the button "G". The GUI is then changed based on the target feature determined by the location of the object relative to the touch-sensitive overlay 34 (step 88). As indicated, the target feature is determined to be the button "G" and other buttons (other user-selectable features) are moved in the GUI, away from the target feature. In the present example, the buttons "R", "T", "C" and "V" are moved away from the determined target, as shown in Figure 4C.

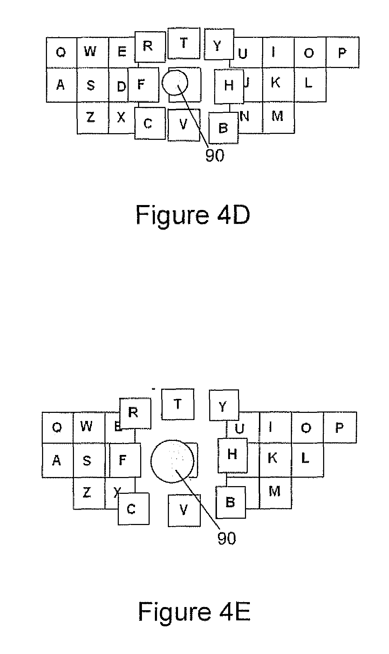

In Figure 4D, the object is moved closer to the touch-sensitive overlay 34 as the object approaches the target feature. Thus, the signal to the controller 36 changes as a result of increased capacitive coupling (step 82). Since the object is moved closer without selection of any button (step 84), the target feature is again determined (step 86). The object is spaced from the screen, closest to the button "G" and therefore the button "G" is determined to be the target feature. Thus, the other buttons surrounding the "G" are moved in the GUI, away from the button "G". In the present example, each of the buttons "R", "T", "Y", "F", "H", "C", "V", "B", are moved away from the button "G" to isolate the nearest user-selectable feature (the button "G") for user visibility.

Referring now to Figure 4E, the object is moved closer still to the touch-sensitive overlay 34 as the object further approaches the target button. Thus, the signal to the controller 36 again changes as a result of increased capacitive coupling (step 82). Since the object is moved closer without selection of any of the buttons (step 84), the target feature is again determined (step 86). The object is spaced from the screen, closest to the button "G" and therefore the button "G" is determined to be the target feature. Thus, the buttons surrounding the button "G" are moved in the GUI, away from the button "G". In the present example, each of the buttons "R", "T", "Y", "F", "H", "C", "V", "B", are moved farther away from the button "G" to further isolate the nearest user-selectable feature (the button "G") for user visibility. Thus, the button "G" is indicated as the user-selectable feature that is closest to the object, or user's finger, prior to selection of the button.

It will be appreciated that if the object moves farther away from the touch-sensitive overlay, the GUI changes such that the other buttons appear to move closer to the button "G" and if the object moves out of range of the sensitivity of the touch screen display 38 the GUI returns to the GUI displayed in Figure 4A, with the buttons appearing in the normal keyboard layout. Thus, as the user's finger approaches a button on the keyboard, the surrounding buttons appear to move away from the button determined to be the target feature. The appearance of the movement of the buttons away from the target button can be smooth as the object approaches the touch-sensitive overlay 34. This provides a confirmation for the user to determine which of the buttons is being selected, prior to selection. When the user touches the touch-sensitive overlay, the target button is selected (step 84) and the method returns to step 80. Although not shown, it will be appreciated that the user can exit the method by any suitable method, for example, by selecting an alternative button (not shown) on the touch screen display 38.

As indicated above, the touch screen display 38 can be any suitable touch screen display. In another embodiment, the touch screen display 20 is a resistive touch screen display. Thus, the resistive touch screen display 20 includes the display 32 and the touch-sensitive overlay 34, which in the present example is a resistive touch-sensitive overlay. It will be appreciated that the resistive touch-sensitive overlay includes a number of layers in a stack and is fixed to the display 32 via a suitable optically clear adhesive. The layers include a rigid substrate of, for example, glass or acrylic, a pair of touch sensor layers that include a resistive circuit layer with a conductive coating of suitable material such as Indium Tin Oxide (ITO), separated by a gap with insulating dots, and a protective cover such as a polyester film. The outer touch sensor layer and the protective cover are flexible for flexing to cause contact between the two touch sensor layers when a force is applied to the protective cover of the touch-sensitive overlay by, for example, a user pressing on the protective cover.

When pressed by a finger or a stylus, for example, the outer touch sensor layer flexes to contact the other touch sensor layer and the location of the point of contact is determined based on measured changes in electrical current. It will be appreciated that the exact method of determination of the location of the point of contact is dependent on the type of resistive touch screen (for example, four wire or five wire), however, the position of contact of the touch sensor layers and relative contact area can be determined. Contact of the touch sensor layers can result from a user pressing with a finger or as a result of a stylus or other object, including a non-conductive object, pressing on the protective cover. Unlike the capacitive touch screen, a non-conductive object can be used for selection of user-selectable features with a resistive touch screen.

Referring again to Figure 3 and to Figures 4A to 4E, another example of the method of controlling the electronic device will be described. As in the example described above, Figures 4A to 4E show portions of a GUI displayed on the display 32 in an example of the method of Figure 3. In the present embodiment, the touch screen display 38 is a resistive touch screen display. Again, the portion of the GUI provides a keyboard for user-selection of buttons in entering data in the form of letters. Thus, the GUI, including the user-selectable buttons of the keyboard, is provided in Figure 4A (step 80).

The user then begins data entry by touching the touch screen display 38. To select a button of the keyboard, the user touches the touch-sensitive overlay 34 at a location of the desired button (target feature) of the keyboard. In the present example, the touch-sensitive overlay 34 is a resistive touch-sensitive overlay and the presence of an object is not detected prior to contact with the touch screen display 38. Instead, the object is detected when contact is made between the touch sensor layers of the touch-sensitive overlay 34. In Figure 4B, the object contacts the protective cover and causes the touch sensor layers to contact each other and the resulting signals are received at the controller 36 (step 82). In the present example, the numeral 90 in Figures 4B to 4E denotes the location of touch of the object on the touch screen display 38.

According to the present example, a selection is not made upon contact of the touch sensor layers of the touch-sensitive overlay 34. Instead, a selection is made based on the area of contact of the touch sensor layers. A user-selectable feature, such as a button of the keyboard shown in Figures 4A to 4E, is selected when the area of contact of the touch sensor layers is determined to exceed a minimum area of contact. Therefore, although contact is initially made between the two touch sensor layers in Figure 4C, the target feature has not yet been selected (step 84) as the area of contact is not sufficient to result in selection. The target feature of the touch screen display 38 is then determined at the processor 22 based on the X and Y values determined from the signals received at the controller 36 (step 86). In the example shown in Figure 4B, the object is touching the protective cover of the touch screen display 38, proximal the keyboard buttons "F" and "G". The target feature is thus determined to be the closest button to the object. In the present example, the target feature is determined to be the button "G". The GUI is then changed based on the target feature determined by the location of the object touching the touch-sensitive overlay 34 (step 88). As indicated, the target feature is determined to be the button "G" and therefore other buttons are moved in the GUI, away from the target feature. In the present example, the buttons "R", "T", "C" and "V" are moved away from the determined target, as shown in Figure 4C.

In Figure 4D, the pressure from the object on the touch-sensitive overlay 34 increases as the object, such as the user's finger, presses the touch-sensitive overlay 34 with greater force. Thus, the signal to the controller 36 changes as a result of increased area of contact of the two touch sensor layers. Since the area of contact is increased without exceeding the minimum required for selection, there is no selection of any button (step 84) and the target feature is again determined (step 86). The object is determined to be closest to the button "G" and therefore all the buttons surrounding the button "G" are moved in the GUI, away from the target feature (away from the button "G"). In the present example, each of the buttons "R", "T", "Y", "F", "H", "C", "V", "B", are moved away from the button "G" to isolate the nearest user-selectable feature (the button "G") for user visibility.

Referring now to Figure 4E, the pressure from the object on the touch-sensitive overlay 34 further increases as the object presses the target button with still greater force. Thus, the signal to the controller 36 changes as a result of increased area of contact of the two touch sensor layers. Since the area of contact is increased without exceeding the minimum required for selection of any button (step 84), the target feature is again determined (step 86). The object is determined to be closest to the button "G" and therefore all the buttons surrounding the button "G" are moved in the GUI, away from the target feature (the button "G"). In the present example, each of the buttons "R", "T", "Y", "F", "H", "C", "V", "B", are moved farther away from the button "G" to further isolate the nearest user-selectable feature (the button "G") for user visibility. Thus, the button "G" is indicated as the user-selectable feature that is closest to the object, or user's finger, prior to selection of the button.

It will be appreciated that if the object pressure on the touch-sensitive overlay 34 decreases, the area of contact of the touch sensor layers decreases and the GUI I changes such that the other buttons appear to move closer to the button "G". Further, if the object is lifted from the touch screen display 38, the GUI returns to that displayed in Figure 4A, with the buttons appearing in the normal keyboard layout. Thus, as the user's finger (or other object) is pressed on the touch screen display 38, the buttons that surround the closest button to the user's finger appear to move away. Again, the appearance of the movement of the buttons away from the button determined to be the target feature can be smooth as the finger or other object presses on the touch-sensitive overlay 34. This provides a confirmation for the user to determine which of the buttons is being selected, prior to selection. When the user touches the touch-sensitive overlay with sufficient pressure to cause the area of contact of the touch sensor layers to exceed the minimum required for selection of a button, the button is selected (step 84) and the method returns to step 80. Again it will be appreciated that the user can exit the method by any suitable method, for example, by selecting an alternative button (not shown) on the touch screen display 38.

While the embodiments described herein are directed to particular implementations of the electronic device and the method of controlling the same, it will be understood that modifications and variations to these embodiments are within the scope and sphere of the present application. For example, the present application has been described with particular reference to a capacitive touch screen and to a resistive touch screen. Other touch screens can be used, however. For example, a resistive touch screen with additional proximity detection for detecting objects spaced from the touch-sensitive overlay can be used. Also, the size and shape of many of the features can differ while still providing the same function. Further, the examples above are described with particular reference to exemplary portions of a GUI. The GUIs can differ, however. For example, different user-selectable features and different buttons can be provided in a different layout.

Many other modifications and variations may occur to those skilled in the art. All such modifications and variations are believed to be within the sphere and scope of the present application.

## Claims

1. A method of controlling an electronic device, comprising:
providing a graphical user interface having a plurality of user-selectable features on a touch-sensitive display;
detecting an object proximal the user-selectable features on the display; and
changing the graphical user interface in response to detecting the object proximal the user-selectable features, prior to selection of any of the user-selectable features.

2. The method according to claim 1, wherein changing the graphical user interface comprises providing a visual indicator associated with a nearest one of the user-selectable features to the object.

3. The method according to claim 2, wherein providing a visual indicator comprises isolating the nearest one of the user-selectable features from others of the user-selectable features.

4. The method according to claim 3, wherein isolating comprises moving the others of the user-selectable features away from the nearest one of the user-selectable features.

5. The method according to claim 4, wherein the user-selectable features comprise user-selectable buttons of the graphical user interface.

6. The method according to any one of the preceding claims, wherein the object is conductive and detecting comprises detecting the object spaced from the touch-sensitive display.

7. The method according to claim 6, wherein changing the graphical user interface comprises changing the graphical user interface as a function of distance of the object from the touch-sensitive display.

8. The method according to claim 7, wherein changing the graphical user interface comprises moving others of the user-selectable features away from the nearest one of the user-selectable features, the others of the user-selectable features being moved farther away with decreasing distance of the object from the touch-sensitive display.

9. The method according to claim 8, comprising selecting the nearest one of the user-selectable features in response to contact of the object with the touch-sensitive display.

10. The method according to any one of claims 1 to 6, wherein changing the graphical user interface comprises changing the graphical user interface as a function of area of contact of layers of the touch-sensitive display as a result of pressure from the object on the touch-sensitive display.

11. The method according to claim 10, wherein changing the graphical user interface comprises moving others of the user-selectable features a distance away from the nearest one of the user-selectable features, the distance increasing with increasing area of contact of the layers.

12. The method according to claim 11, wherein the nearest one of the user-selectable features is selected when the area of contact of the layers reaches a minimum area of contact.

13. An electronic device comprising:
a display device for displaying a graphical user interface having a plurality of user-selectable features;
a touch-sensitive input device having an overlay disposed on the display device and a controller connected to the overlay, the touch-sensitive input device for providing a touch-sensitive area on the overlay, on the plurality of user-selectable features and for detecting an object proximal the user-selectable features on the display device; and
functional components comprising a processor connected to the display device and touch-sensitive input device, and a memory device for storage of computer-readable program code executable by the processor for causing the electronic device to implement the steps of the method according to any one of claims 1 to 12.

14. A computer-readable medium having computer-readable code embodied therein for execution by a processor of a computing device for causing the computing device to implement the steps of the method according to any one of claims 1 to 12.

## Amended claims

### Amended claims in accordance with Rule 137(2) EPC.

**1.** A method of controlling an electronic device (20), comprising:
providing (80) a graphical user interface (Fig 4A) having a plurality of user-selectable features (R,T,Y,F,G,H,C,V,B ) on a touch-sensitive display (38);
detecting an object (90) proximal the user-selectable features (R,T,Y,F,G,H,C,V,B) on the display (38); and
changing the graphical user interface (Fig 4C- Fig 4D) in response to detecting the object (90) proximal the user-selectable features (R,T,Y,F,G,H,C,V,B), prior to selection (84) of any of the user-selectable features (R,T,Y,F,G,H,C,V,B), wherein changing the graphical user interface comprises:
determining (86) the user-selectable feature (G) closest to the object (90); and
updating (88) the graphical user interface by altering the locations of the representations of user-selectable features (R,T,Y,F,H,C,V,B) adjacent to the user-selectable feature (G) closest to the object (90) by moving the locations of said representations (R,T,Y,F,H,C,V,B) away from the representation of the user-selectable feature (G) closest to the object (90) so as to increase the separation between the user-selectable feature (G) closest to the object and the adjacent the user selectable features (R,T,Y,F,H,C,V,B).

**2.** The method according to claim 1, wherein the user-selectable features (R,T,Y,F,G,H,C,V,B) comprise user-selectable buttons of the graphical user interface.

**3.** The method according to any one of the preceding claims, wherein the object (90) is conductive and detecting comprises detecting the object (90) spaced from the touch-sensitive display (38).

**4.** The method according to claim 3, wherein changing the graphical user interface comprises changing the graphical user interface as a function of distance of the object (90) from the touch-sensitive display (38).

**5.** The method according to claim 4, wherein changing the graphical user interface comprises updating (88) the graphical user interface by altering the locations of the representations of user-selectable features (R,T,Y,F,H,C,V,B) adjacent to the user-selectable feature (G) closest to the object (90) wherein the locations of said representations (R,T,Y,F,H,C,V,B) are moved farther away from the representation of the user-selectable feature (G) closest to the object (90) with decreasing distance of the object (90) from the touch-sensitive display (38).

**6.** The method according to claim 5, further comprising selecting (84) user-selectable feature (G) closest to the object (90) in response to contact of the object (90) with the touch-sensitive display (38).

**7.** The method according to any one of claims 1 to 3, wherein changing the graphical user interface comprises changing the graphical user interface as a function of area of contact of layers of the touch-sensitive display (38) as a result of pressure from the object (90) on the touch-sensitive display (38).

**8.** The method according to claim 7, wherein changing the graphical user interface comprises updating (88) the graphical user interface by altering the locations of the representations of user-selectable features (R,T,Y,F,H,C,V,B) adjacent to the user-selectable feature (G) closest to the object (90) wherein the locations of said representations (R,T,Y,F,H,C,V,B) are moved a distance away from the representation of the user-selectable feature (G) closest to the object (90), the distance increasing with increasing area of contact of the layers.

**9.** The method according to claim 8 further comprising selecting (84) the user-selectable feature (G) in response to the area of contact of the layers reaching a minimum area of contact.

**10.** An electronic device (20) comprising:
a display device (32) for displaying a graphical user interface having a plurality of user-selectable features (R,T,Y,F,H,C,V,B);
a touch-sensitive input device (38) having an overlay (34) disposed on the display device (32) and a controller (36) connected to the overlay (34), the touch-sensitive input device (38) for providing a touch-sensitive area on the overlay, on the plurality of user-selectable features(R,T,Y,F,H,C,V,B) and for detecting an object (90) proximal the user-selectable features (R,T,Y,F,H,C,V,B) on the display device (32); and
functional components comprising a processor (22) connected to the display device (32) and touch-sensitive input device (38), and a memory device (28) for storage of computer-readable program code executable by the processor (22) for causing the electronic device (20) to implement the steps of the method according to any one of claims 1 to 9.

**11.** A computer-readable medium having computer-readable code embodied therein for execution by a processor (22) of a computing device (20) for causing the computing device to implement the steps of the method according to any one of claims 1 to 9.
